(19) Europäisches Patentamt
European Patent Office
Office européen des brevets

(11) **EP 2 921 863 B1**

(12) **FASCICULE DE BREVET EUROPEEN**

(45) Date de publication et mention
de la délivrance du brevet:
**15.11.2017 Bulletin 2017/46**

(51) Int Cl.:
***G01P 13/02*** (2006.01)   ***G01P 21/00*** (2006.01)

(21) Numéro de dépôt: **15159018.9**

(22) Date de dépôt: **13.03.2015**

(54) **Procédé et dispositif d'estimation automatique de paramètres liés à un vol d'un aéronef**

Verfahren und Vorrichtung zum automatischen Abschätzen von Flugparametern eines Luftfahrzeugs

Method and device for automatically estimating parameters linked to the flight of an aircraft

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.03.2014 FR 1452200**

(43) Date de publication de la demande:
**23.09.2015 Bulletin 2015/39**

(73) Titulaire: **AIRBUS OPERATIONS (SAS)
31060 Toulouse (FR)**

(72) Inventeur: **Walter, Stéphane
31490 BRAX (FR)**

(74) Mandataire: **Gevers & Orès
41 avenue de Friedland
75008 Paris (FR)**

(56) Documents cités:
**EP-A1- 2 642 302    WO-A1-2013/144157
FR-A1- 2 979 993    US-A1- 2010 100 260
US-B1- 6 273 370**

**Description**

La présente invention concerne un procédé et un dispositif d'estimation automatique d'au moins un paramètre lié à un vol d'un aéronef, et notamment l'incidence de l'aéronef.

Dans le cadre de la présente invention, on entend par « paramètres liés à un vol d'un aéronef », des paramètres de vol de l'aéronef, tels qu'une vitesse air, une incidence ou un nombre de Mach de l'aéronef, et des paramètres extérieurs à l'aéronef et rencontrés par l'aéronef au cours du vol, tels que la température totale par exemple.

De tels paramètres liés à un vol d'un aéronef sont généralement déterminés à l'aide de mesures réalisées sur l'aéronef à partir de sondes, telles que des sondes de pression totale, de température totale ou d'incidence. Or des phénomènes météorologiques, tels que le givre notamment, peuvent avoir des effets sur des capteurs et des sondes jusqu'à conduire à une altération de la mesure réalisée, la rendant parfois erronée (figée ou biaisée). La présente invention a notamment pour objet de remédier à cet inconvénient.

On sait qu'un aéronef, en particulier un avion de transport, est généralement pourvu d'une centrale anémobarométrique de type ADC (« Air Data Computer » en anglais) qui fournit, en temps réel, une vitesse conventionnelle de type CAS (pour « Calibrated Air Speed » en anglais). Pour ce faire, cette centrale anémobarométrique est associée à des sondes de pression totale (tubes de Pitot), et elle peut, par exemple, faire partie d'un système de données air et de données inertielles de type ADIRS (pour « Air Data Inertial Reference System » en anglais), qui représente une centrale de références inertielles intégrant les fonctions de la centrale anémobarométrique. Or, des données air (notamment des vitesses air) erronées ou absentes peuvent, par exemple, apparaître lors de pannes de systèmes, d'une information erronée de capteurs, ou lors de la présence de givre ou de cristaux de glace.

Par le brevet FR-2 979 993, on connaît un procédé et dispositif permettant de fournir une vitesse air alternative, susceptible d'être déterminée même en cas de défaillance d'une centrale anémobarométrique et/ou de sondes de pression associées, notamment des sondes Pitot. Pour ce faire, ce brevet FR-2 979 993 divulgue notamment un procédé pour estimer automatiquement une vitesse air d'un aéronef, particulièrement précise et susceptible d'être déterminée même en présence de données air erronées. Ce procédé prévoit, à cet effet, de calculer une vitesse air dite vitesse aérodynamique, à partir des valeurs courantes de paramètres (masse, facteur de charge, incidence,...) liés à l'aéronef et comprenant des paramètres aérodynamiques, de recevoir une vitesse conventionnelle courante, générée par une centrale anémobarométrique, de soustraire à cette vitesse conventionnelle une vitesse estimée de manière à obtenir une vitesse résiduelle, de comparer cette vitesse résiduelle à une valeur de seuil, et en fonction de cette comparaison :

- tant que la vitesse résiduelle est inférieure ou égale à la valeur de seuil, de l'intégrer de manière à obtenir une valeur corrective qui est ajoutée à la vitesse aérodynamique pour obtenir finalement la vitesse air estimée ; et
- dès la vitesse résiduelle est supérieure à la valeur de seuil (pendant une durée de confirmation), illustrant la détection d'un problème de validité de la vitesse conventionnelle, et tant que cela reste le cas, d'ajouter une valeur corrective figée à la vitesse aérodynamique pour obtenir la vitesse air estimée.

Ce procédé d'estimation automatique de la vitesse air de l'aéronef permet d'obtenir une bonne estimation de la vitesse air, en cas de défaillance temporaire des sondes de pression totale.

Ce procédé d'estimation automatique de la vitesse air utilise notamment une valeur de l'angle d'incidence de l'aéronef pour calculer la vitesse air. L'angle d'incidence (« angle of attack » en anglais) est l'angle entre une ligne de référence sur l'aéronef et la direction de déplacement de l'aéronef par rapport à la masse d'air qui l'entoure. Cet angle est généralement fourni en temps réel par des sondes d'incidence, formées par des girouettes montées sur la surface extérieure de l'aéronef.

Toutefois, dans certains cas particuliers, de la glace peut se former au niveau des sondes d'incidence et perturber leur fonctionnement, ce qui empêche alors de disposer d'une indication fiable de l'angle d'incidence sur l'aéronef. De plus, si une perturbation du fonctionnement des tubes de pression totale se produit simultanément à une telle perturbation du fonctionnement des sondes d'incidence, le procédé précité d'estimation automatique de la vitesse air ne peut pas se dérouler correctement.

Par ailleurs, on connaît :

- par le document US-2010/100260, un système pour vérifier si une valeur d'incidence de l'aéronef est cohérente, et peut être utilisée ou non lors d'un vol ;
- par le document EP-2 642 302, un système pour comparer des valeurs mesurée et estimée de l'incidence dans le but de détecter d'éventuelles incohérences ; et
- par le document WO-2013/144157, un système pour déterminer un état de crédibilité de mesures d'un capteur d'incidence d'un aéronef.

La présente invention a pour objet d'estimer automatiquement au moins un paramètre lié à un vol d'un aéronef, dont au moins une incidence de l'aéronef, permettant de remédier à l'inconvénient précité. Elle concerne un procédé d'estimation automatique d'au moins un paramètre lié à un vol d'un aéronef, comprenant au moins une première suite d'étapes successives pour déterminer automatiquement une incidence estimée corrigée d'un aéronef, en particulier d'un avion de transport, qui est particulièrement précise et qui est susceptible d'être déterminée même en en cas de défaillance de sondes d'incidence.

Selon l'invention, ladite première suite d'étapes successives consiste, de façon automatique et itérative :

a) à calculer une incidence estimée à partir de paramètres aérodynamiques et de paramètres inertiels liés à l'aéronef ;
b) à mesurer une incidence de l'aéronef ;
c) à vérifier si l'incidence mesurée est considérée comme cohérente ou incohérente ; et
d) en fonction de cette vérification :

- tant que l'incidence mesurée est considérée comme cohérente, à déterminer une valeur de correction et à ajouter cette valeur de correction à ladite incidence estimée pour obtenir l'incidence estimée corrigée ; et
- dès que l'incidence mesurée est considérée comme incohérente, et tant que cela reste le cas, à ajouter une valeur corrective figée à ladite incidence estimée pour obtenir l'incidence estimée corrigée,

ledit procédé comprenant, de plus, une seconde suite d'étapes successives pour déterminer automatiquement une vitesse air estimée d'un aéronef, ladite seconde suite d'étapes successives consistant, de façon automatique et itérative :

A/ à calculer une vitesse air dite vitesse aérodynamique, à partir de valeurs courantes de paramètres aérodynamiques et de paramètres inertiels de l'aéronef, dont une valeur d'incidence en utilisant comme valeur d'incidence, l'incidence estimée corrigée, déterminée à l'étape d) de la première suite d'étapes successives ;
B/ à déterminer une vitesse conventionnelle courante, à l'aide d'une centrale anémobarométrique ;
C/ à soustraire à cette vitesse conventionnelle une vitesse estimée à l'itération précédente de manière à obtenir une vitesse résiduelle ;
D/ à comparer cette vitesse résiduelle à une valeur de seuil ;
E/ en fonction de la comparaison réalisée à l'étape D/ :

- tant que cette vitesse résiduelle est inférieure ou égale à ladite valeur de seuil, à calculer une valeur corrective que l'on multiplie à ladite vitesse aérodynamique pour obtenir la vitesse air estimée ; et
- dès que cette vitesse résiduelle est supérieure à ladite valeur de seuil, et tant que cela reste le cas, à appliquer une valeur corrective figée que l'on multiplie à ladite vitesse aérodynamique pour obtenir la vitesse air estimée.

Dans le cadre de la présente invention :

- les paramètres aérodynamiques sont des paramètres résultant de mesures de l'air autour de l'aéronef. Ces paramètres comprennent la mesure de la pression statique et de la pression dynamique, qui sont mesurées par des sondes de pression statique et par des sondes de pression dynamique (tubes de Pitot), la mesure de l'incidence, fournie par des sondes d'incidence, et la mesure de la température de l'air. La fiabilité de certains de ces paramètres aérodynamiques peut être sujette à caution. En effet, à l'exception de la sonde de pression statique, toutes les sondes de paramètres aérodynamiques peuvent être affectées par le gel ; et
- les paramètres inertiels sont des paramètres fournis par une centrale inertielle de l'aéronef, et correspondent à des valeurs d'accélération mesurées par cette centrale inertielle, ou à des valeurs de vitesse ou de position calculées en intégrant les valeurs d'accélération.

Le fait de calculer l'incidence estimée à partir de paramètres aérodynamiques et de paramètres inertiels, au lieu de la déterminer à partir de paramètres aérodynamiques comme dans l'art antérieur, permet de réaliser ce calcul en l'absence de certains des paramètres aérodynamiques. Ainsi, dans un mode de réalisation particulier, le calcul de l'incidence estimée peut être réalisé en utilisant uniquement des paramètres inertiels et la mesure de la pression statique. Dans ce mode de réalisation particulier, l'incidence estimée est insensible à des erreurs de mesure liées au gel des sondes aérodynamiques.

Ainsi, grâce à l'invention, on dispose à bord de l'aéronef d'une valeur d'incidence (incidence estimée corrigée), qui est susceptible d'être déterminée même en cas de défaillance (notamment du givrage) de sondes d'incidence. De plus, cette valeur d'incidence présente une précision suffisamment élevée pour qu'elle puisse être utilisée par divers systèmes de l'aéronef.

EP 2 921 863 B1

Avantageusement, l'étape a) consiste à calculer l'incidence estimée $\alpha$ à l'aide de l'expression suivante :

$$\alpha = (\theta - \gamma)/\cos\phi$$

dans laquelle :

- $\theta$ est un angle d'inclinaison longitudinale de l'aéronef, encore appelé assiette de l'aéronef ;
- $\phi$ est un angle de roulis de l'aéronef ;
- cos est le cosinus ; et
- $\gamma$ est une pente air de l'aéronef.

En outre, de façon avantageuse, le procédé comprend une étape consistant à calculer la pente air $\gamma$ à l'aide de l'expression suivante :

$$\gamma = Vzbi/Vtas$$

dans laquelle :

- *Vzbi* est une vitesse verticale déterminée à partir de données inertielles de l'aéronef ; et
- *Vtas* est une vitesse vraie, qui correspond à une vitesse vraie estimée au moins en absence de valeur de vitesse vraie fournie par un calculateur de données air.

En outre, de façon avantageuse, le procédé comprend également une étape consistant à calculer une température totale estimée *TAT1* à l'aide de l'expression suivante :

$$TAT1 = (k3 + \Delta ISA1 - k4 * Zp) * (1 + k5 * M1^2)$$

dans laquelle :

- *k3* à *k5* sont des valeurs prédéterminées ;
- *Zp* est une altitude de l'aéronef ;
- *M1* est un nombre de Mach estimé ; et
- $\Delta ISA1 = ((TAT/(1+k6*s))*(1/(1+k7*M1^2)))-k8+k9*Zp$

dans laquelle :

- TAT est une température totale mesurée ;
- l'expression ($TAT/(1+k6*s)$) correspond à la valeur TAT filtrée par un filtre du premier ordre, de constante de temps *k*6 ; et
- *k6* à *k9* sont des valeurs prédéterminées.

De plus, de façon avantageuse, le procédé comprend également une étape consistant à calculer un nombre de Mach estimé *M1,* à l'aide des expressions suivantes :

- quand une altitude *Zp* de l'aéronef est comprise entre le sol et une première valeur prédéterminée, de préférence 30 000 pieds :

$$M1 = (Vc1/k10) * (1 + k11 * Zp)^4$$

- quand l'altitude *Zp* de l'aéronef est comprise entre ladite première valeur et une seconde valeur prédéterminée (de préférence 36 000 pieds) qui est supérieure à ladite première valeur :

$$M1 = (Vc1/k10)*(1+k11*Zp+k12*(Zp-k13))^4$$

dans lesquelles :

- $Vc1$ est une vitesse air estimée ;
- $Zp$ est l'altitude de l'aéronef comprise entre le sol et ladite seconde valeur ; et
- $k10$ à $k13$ sont des paramètres prédéterminés.

Par ailleurs, ledit procédé peut présenter au moins certaines des caractéristiques suivantes, prises individuellement ou en combinaison :

- à l'étape c), l'incidence mesurée est considérée comme incohérente, si l'une des conditions suivantes est remplie :

  - la différence entre une incidence estimée et l'incidence mesurée est supérieure à une valeur de seuil prédéterminée pendant une durée prédéterminée ;
  - un calculateur de données air considère l'incidence mesurée comme incohérente ;

- le procédé comprend une étape de surveillance d'au moins une température totale mesurée pour détecter un éventuel givrage d'une sonde de température totale.

La vitesse air, dite vitesse aérodynamique, qui est calculée à partir de paramètres aérodynamiques et de paramètres inertiels, peut ainsi être calculée en l'absence de certains des paramètres aérodynamiques. Ainsi, dans un mode de réalisation particulier, le calcul de la vitesse aérodynamique peut être réalisé en utilisant uniquement des paramètres inertiels et la mesure de la pression statique. Dans ce mode de réalisation particulier, la vitesse aérodynamique est insensible à des erreurs de mesure liées au gel des sondes aérodynamiques.

En outre, avantageusement, l'étape E/ comprend une opération consistant à calculer la valeur corrective $Vcorr$ à l'aide de l'expression d'intégration suivante :

$$Vcorr = (Vc/Vcaero)/(1+\tau s)$$

dans laquelle :

- $Vc$ est la vitesse conventionnelle ;
- $Vcaero,$ est la vitesse aérodynamique ; et
- $\tau$ est une constante de temps.

La présente invention concerne également un dispositif d'estimation automatique d'au moins un paramètre lié à un vol d'un aéronef, dont au moins une incidence de l'aéronef, ledit dispositif comportant au moins un premier ensemble d'estimation pour déterminer automatiquement une incidence estimée corrigée.

A cet effet, selon l'invention, ledit premier ensemble d'estimation comprend :

- une première unité de calcul configurée pour calculer une incidence estimée à partir de paramètres aérodynamiques et de paramètres inertiels liés à l'aéronef ;
- une unité de réception configurée pour recevoir une incidence mesurée de l'aéronef ;
- une unité de vérification configurée pour vérifier si l'incidence mesurée est considérée comme cohérente ou incohérente ; et
- une seconde unité de calcul configurée pour, en fonction de cette vérification :

  - tant que l'incidence mesurée est considérée comme cohérente, déterminer une valeur de correction et ajouter cette valeur de correction à ladite incidence estimée pour obtenir l'incidence estimée corrigée ; et
  - dès que l'incidence mesurée est considérée comme incohérente, et tant que cela reste le cas, ajouter une valeur corrective figée à ladite incidence estimée pour obtenir l'incidence estimée corrigée.

Le dispositif comporte, de plus, un second ensemble d'estimation pour déterminer automatiquement une vitesse air estimée d'un aéronef, ledit second ensemble d'estimation comprenant :

- une troisième unité de calcul configurée pour calculer une vitesse air dite vitesse aérodynamique, à partir de valeurs courantes de paramètres aérodynamiques et de paramètres inertiels de l'aéronef, dont une valeur d'incidence ;
- une unité de réception configurée pour recevoir une vitesse conventionnelle courante, déterminée par une centrale anémobarométrique ;
- une quatrième unité de calcul configurée pour soustraire à cette vitesse conventionnelle une vitesse estimée à l'itération précédente de manière à obtenir une vitesse résiduelle ;
- une cinquième unité de calcul configurée pour comparer cette vitesse résiduelle à une valeur de seuil ; et
- une sixième unité de calcul configurée, pour en fonction de cette comparaison :

  - tant que cette vitesse résiduelle est inférieure ou égale à ladite valeur de seuil, calculer une valeur corrective qui est appliquée à ladite vitesse aérodynamique pour obtenir la vitesse air estimée ; et
  - dès que cette vitesse résiduelle est supérieure à ladite valeur de seuil, illustrant la détection d'un problème de validité de la vitesse conventionnelle, et tant que cela reste le cas, appliquer une valeur corrective figée à ladite vitesse aérodynamique pour obtenir la vitesse air estimée,

la troisième unité de calcul étant configurée pour calculer la vitesse aérodynamique en utilisant comme valeur d'incidence, l'incidence estimée corrigée, déterminée par le premier ensemble d'estimation.

En outre, avantageusement, ledit dispositif comporte, de plus, au moins l'un des ensembles suivants :

- un ensemble d'estimation pour déterminer une vitesse vraie estimée ;
- un ensemble d'estimation pour déterminer une température totale estimée ; et
- un ensemble d'estimation pour déterminer un nombre de Mach estimé.

La présente invention concerne, en outre, un aéronef, en particulier un avion de transport, qui comporte un dispositif tel que celui précité.

Les figures du dessin annexé feront bien comprendre comment l'invention peut être réalisée. Sur ces figures, des références identiques désignent des éléments semblables.

La figure 1 est le schéma synoptique d'un mode de réalisation particulier d'un dispositif conforme à l'invention.

Les figures 2 à 4 sont les schémas synoptiques de modes de réalisation particuliers d'ensembles de traitement du dispositif de la figure 1.

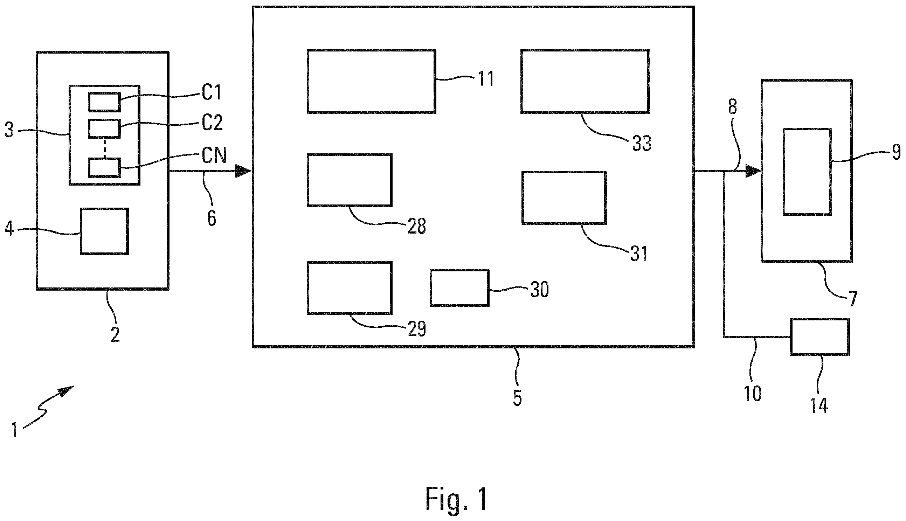

Le dispositif 1 illustrant l'invention et représenté schématiquement sur la figure 1 est destiné notamment à estimer automatiquement des paramètres liés à un vol d'un aéronef (non représenté), en particulier d'un avion de transport, de manière à fournir des paramètres qui sont précis et qui ne sont pas perturbés ou biaisés, notamment par des données air erronées. Il peut s'agir de paramètres de vol de l'aéronef, tels qu'une vitesse air, une incidence ou un nombre de Mach de l'aéronef, ainsi que de paramètres extérieurs à l'aéronef et rencontrés par l'aéronef au cours du vol, tels que la température totale par exemple.

Ledit dispositif 1 qui est embarqué sur l'aéronef comporte, de façon usuelle, un ensemble 2 usuel de sources d'informations, par exemple un système de données air et de données inertielles de type ADIRS (pour « Air Data Inertial Reference system » en anglais), qui comporte :

- un ensemble 3 de capteurs C1, C2,..., CN, N étant un entier, en particulier des sondes et notamment des modes de pression totale, de température totale et d'incidence ; et
- un ensemble 4 de moyens usuels, comprenant par exemple une centrale anémobarométrique de type ADC (« Air Data Computer » en anglais), qui détermine et fournit les valeurs de paramètres, à l'aide notamment de mesures réalisées par ledit ensemble 3 de capteurs.

Le dispositif 1 comprend également :

- une unité de traitement 5 qui est reliée par l'intermédiaire d'une liaison 6 audit ensemble 2 ; et
- une unité d'affichage 7 qui est reliée par l'intermédiaire d'une liaison 8 à ladite unité de traitement 5 et qui est formée de manière à afficher sur au moins un écran de visualisation 9 du poste de pilotage de l'aéronef des valeurs de paramètres déterminés par le dispositif 1. Un ou des filtres peuvent être prévus pour filtrer une valeur à afficher avant de la présenter sur l'écran de visualisation 9, de manière à obtenir un confort visuel satisfaisant.

Ces valeurs peuvent également être transmises à un ensemble de dispositifs utilisateurs 14 de l'aéronef (par exemple des calculateurs et/ou des systèmes d'alarme) via une liaison 10.

Selon l'invention, l'unité de traitement 5 du dispositif 1 comporte au moins un ensemble d'estimation 11 (ou unité d'estimation) pour déterminer automatiquement une incidence estimée corrigée.

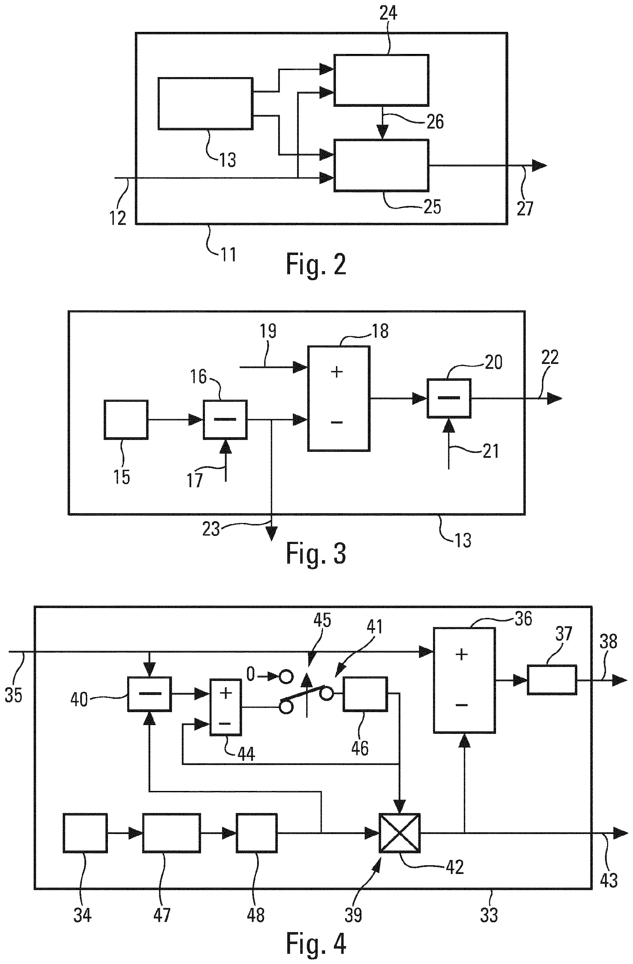

A cet effet, selon l'invention, ledit ensemble d'estimation 11 comprend, comme représenté sur la figure 2 :

- des moyens de réception (liaison 12) configurés pour recevoir une incidence mesurée de l'aéronef, fournie par l'ensemble 2 (la liaison 12 étant par exemple liée à la liaison 6) ;
- une unité de calcul 13 configurée pour calculer une incidence estimée à partir de paramètres aérodynamiques et de paramètres inertiels liés à l'aéronef (et également reçu de l'ensemble 2) ;
- une unité de vérification 24 configurée pour vérifier si l'incidence mesurée (reçue via la liaison 12) est considérée comme cohérente ou incohérente ; et
- une unité de calcul 25 configurée pour, en fonction de la vérification réalisée par l'unité de vérification 24 (et reçue via une liaison 26) :

  - tant que l'incidence mesurée est considérée comme cohérente, déterminer une valeur de correction et ajouter cette valeur de correction à ladite incidence estimée pour obtenir l'incidence estimée corrigée ; et
  - dès que l'incidence mesurée est considérée comme incohérente, et tant que cela reste le cas, ajouter une valeur corrective figée à ladite incidence estimée pour obtenir l'incidence estimée corrigée.

Ledit ensemble d'estimation 11 peut transmettre l'incidence estimée corrigée via une liaison 27 à différents éléments d'estimation et/ou de traitement du dispositif 1 et/ou à des moyens utilisateurs externes au dispositif 1 (par exemple par l'intermédiaire des liaisons 8 et 10).

Ainsi :

- si l'incidence mesurée est considérée comme crédible (cohérente), une valeur de correction est calculée pour faire converger une incidence estimée corrigée avec l'incidence mesurée ; et
- si l'incidence mesurée est considérée comme non crédible (incohérente), la valeur de correction est figée à sa dernière valeur considérée comme correcte, c'est-à-dire à la valeur de correction calculée pour la dernière incidence considérée comme crédible, et l'incidence estimée corrigée est rendue indépendante de l'incidence mesurée.

Par conséquent, grâce à l'ensemble d'estimation 11 du dispositif 1, on dispose à bord de l'aéronef d'une valeur d'incidence (incidence estimée corrigée), qui est susceptible d'être déterminée même en cas de défaillance (de givrage notamment) de sondes d'incidence. De plus, cette valeur d'incidence présente une précision suffisamment élevée pour qu'elle puisse être utilisée par divers systèmes de l'aéronef.

L'unité de vérification 24 considère l'incidence mesurée comme incohérente, si l'une des conditions suivantes est remplie :

- la différence entre une incidence estimée et l'incidence mesurée est supérieure à une valeur de seuil prédéterminée pendant une durée prédéterminée ; et
- un calculateur de données air de type ADC, faisant par exemple partie de l'ensemble 2, considère l'incidence mesurée comme incohérente et émet un message correspondant, par exemple lorsque la vitesse descend sous 60 noeuds.

Une alarme (sonore et/ou visuelle) est déclenchée lorsque la différence entre l'incidence mesurée et l'incidence estimée excède un seuil (par exemple 1°), pendant au moins une durée prédéterminée (par exemple 10s).

Par ailleurs, l'unité de calcul 13 comporte, comme représenté sur la figure 3 :

- un moyen 15 pour déterminer, de façon usuelle, une vitesse verticale $Vzbi$ à l'aide de données inertielles de l'aéronef ;
- un moyen de calcul 16 pour calculer une pente air $\gamma$ représentant le rapport entre cette vitesse verticale $Vzbi$ et une vitesse vraie $Vtas$ . La vitesse vraie $Vtas$ , reçue par l'intermédiaire d'une liaison 17, correspond à une vitesse vraie estimée $Vtas1$ (précisée ci-dessous) au moins en absence de valeur de vitesse vraie fournie par un calculateur de données air (de l'ensemble 2) ;
- un moyen de calcul 18 pour soustraire la pente air $\gamma$ déterminée par le moyen de calcul 16 à un angle d'inclinaison longitudinal $\theta$ de l'aéronef, reçu par l'intermédiaire d'une liaison 19 (par exemple de l'ensemble 2) ; et
- un moyen de calcul 20 pour calculer le rapport entre la différence reçue du moyen de calcul 18 et le cosinus de l'angle de roulis $\phi$ de l'aéronef, reçu par une liaison 21 (par exemple de l'ensemble 2).

L'unité de calcul 13 comprend donc des éléments de calcul pour calculer l'incidence estimée $\alpha$ à l'aide de

l'expression suivante :

$$\alpha = (\theta - \gamma)/\cos\phi$$

dans laquelle :

- $\theta$ est l'angle d'inclinaison longitudinale de l'aéronef, encore appelé assiette de l'aéronef ;
- $\phi$ est l'angle de roulis de l'aéronef ;
- cos est le cosinus ; et
- $\gamma$ est la pente air de l'aéronef.

L'unité de calcul 13 peut transmettre cette incidence estimée $\alpha$ (via une liaison 22) à différents éléments d'estimation et/ou de traitement du dispositif 1 (unités 24 et 25 notamment) et/ou à des moyens utilisateurs externes au dispositif 1 (par exemple par l'intermédiaire des liaisons 8 et 10).

De même, la pente air $\gamma$ calculée par l'élément de calcul 16 peut être transmise via une liaison 23 à différents éléments d'estimation et/ou de traitement du dispositif 1 et/ou à des moyens utilisateurs externes au dispositif 1 (par exemple par l'intermédiaire des liaisons 8 et 10).

L'élément de calcul 16 est donc configuré pour calculer la pente air $\gamma$ à l'aide de l'expression suivante :

$$\gamma = Vzbi/Vtas$$

dans laquelle :

- $Vzbi$ est la vitesse verticale déterminée à partir de données inertielles de l'aéronef ; et
- $Vtas$ est la vitesse vraie, qui correspond à une vitesse vraie estimée $Vtas1$ au moins en absence de valeur de vitesse vraie fournie par un calculateur de données air.

L'unité de traitement 5 du dispositif 1 comprend, de plus, un élément de calcul 28 pour calculer une vitesse vraie estimée $Vtas1$ à l'aide de l'expression suivante :

$$Vtas1 = k1 * \sqrt{(\gamma * R * TAT)/(1 + k2 * M1^2)} * M1$$

dans laquelle :

- $\gamma$ est la pente air de l'aéronef ;
- $k1, k2$ et R sont des valeurs prédéterminées, à savoir :

  - k1 = 1/0,5144 ;
  - k2 = 0,2 ;
  - R = 287J ;

- $TAT$ est une température totale mesurée ; et
- $M1$ est un nombre de Mach estimé, précisé ci-dessous.

En outre, l'unité de traitement 5 du dispositif 1 comprend également un élément de calcul 29 pour calculer une température totale estimée $TAT1$ (exprimée en °K) à l'aide de l'expression suivante :

$$TAT1 = (k3 + \Delta ISA1 - k4 * Zp) * (1 + k5 * M1^2)$$

dans laquelle :

- $k3$ à $k5$ sont des valeurs prédéterminées, à savoir ;

- k3 = 288 ;
- k4 = 1,98/1000 ;
- k5 = 0,2 ;

- *Zp* est une altitude de l'aéronef, exprimée en pieds ; et
- *M1* est le nombre de Mach estimé.

En outre, le dispositif 1 comprend également un élément de calcul, en particulier l'élément de calcul 29, pour calculer la valeur Δ*ISA*1 précitée à l'aide de l'expression suivante :

$$\Delta ISA1 = ((TAT/(1+k6*s))*(1/(1+k7*M1^2)))-k8+k9*Zp$$

dans laquelle :

- TAT est une température totale mesurée, exprimée en °K ;
- l'expression (*TAT*/(1+*k6*s*)) correspond à la température totale mesurée TAT, filtrée par un filtre du premier ordre de constante de temps *k6* ; et - *k6 à k9* sont des valeurs prédéterminées, à savoir :

  - k6 = 30;
  - k7 = 0,2;
  - k8 = 288; et
  - k9 = 1,98/1000

Les valeurs *k1* à *k9* présentent des unités appropriées, et le cas échéant aucune dimension.
Par ailleurs, le dispositif 1 comprend une unité de surveillance 30 d'une température totale mesurée (et reçue par exemple de l'ensemble 2) pour détecter un éventuel givrage d'une sonde de température totale.
L'unité de surveillance 30 (qui fait de préférence partie de l'unité de traitement 5) comprend un élément de calcul pour calculer la différence entre la température totale estimée, reçue de l'élément de calcul 29, et une température totale mesurée, reçue de l'ensemble 2, et un élément de comparaison pour comparer cette différence à une valeur de seuil.
Dans un mode de réalisation particulier, l'unité de surveillance 30 indique que :

- la température totale mesurée est considérée comme gelée (givrage des sondes de température totale) si la différence précitée, dépasse un premier seuil, par exemple 10°C ; et
- la température totale mesurée est de nouveau considérée comme dégelée, si la différence précitée repasse sous un second seuil, par exemple 5°C.

De plus, l'unité de traitement 5 du dispositif 1 comprend également un élément de calcul 31 pour calculer un nombre de Mach estimé *M1,* à l'aide des expressions suivantes :

- quand l'altitude *Zp* de l'aéronef est comprise entre le sol (0 pied) et une première valeur prédéterminée, de préférence 30 000 pieds :

$$M1 = (Vc1/k10)*(1+k11*Zp)^4$$

- et quand l'altitude *Zp* de l'aéronef est comprise entre ladite première valeur et une seconde valeur prédéterminée (supérieure à cette première valeur), de préférence 36 000 pieds :

$$M1 = (Vc1/k10)*(1+k11*Zp+k12*(Zp-k13))^4$$

dans lesquelles :

- *Vc1* est une vitesse air estimée, exprimée en noeuds ;
- *Zp* est l'altitude de l'aéronef, exprimée en pieds et définie entre 0 pied et 36 000 pieds (niveau de vol : FL360) ; et
- *k10* à *k13* sont des paramètres prédéterminés, à savoir :

- k10 = 661,5 ;
- k11 = 5*10$^{-6}$ ;
- k12 = 1,2*10$^{-6}$ ;
- k13 = 30000.

En outre, dans un mode de réalisation particulier, le dispositif 1 comporte, de plus, un ensemble d'estimation 33 (ou unité d'estimation) pour déterminer automatiquement une vitesse air estimée de l'aéronef.

Cet ensemble d'estimation 33 comprend, comme représenté sur la figure 4 :

- une unité de calcul 34 configurée pour calculer une vitesse air dite vitesse aérodynamique, à partir de valeurs courantes (reçues de l'ensemble 2) de paramètres aérodynamiques et de paramètres inertiels de l'aéronef ;
- un moyen (à savoir une liaison 35) pour recevoir une vitesse conventionnelle courante, déterminée par une centrale anémobarométrique et reçue de l'ensemble 2 ;
- une unité de calcul 36 configurée pour soustraire à cette vitesse conventionnelle une vitesse estimée à une itération précédente de manière à obtenir une vitesse résiduelle ;
- une unité de calcul 37 configurée pour comparer cette vitesse résiduelle à une valeur de seuil λ, par exemple 20 noeuds ; et
- une unité de calcul configurée 39, pour en fonction de cette comparaison :

  • tant que cette vitesse résiduelle est inférieure ou égale à ladite valeur de seuil, calculer une valeur corrective qui est appliquée (par une multiplication comme précisé ci-dessous) à ladite vitesse aérodynamique pour obtenir la vitesse air estimée ; et
  • dès que cette vitesse résiduelle est supérieure à ladite valeur de seuil, illustrant la détection d'un problème de validité de la vitesse conventionnelle, et tant que cela reste le cas, appliquer une valeur corrective figée à ladite vitesse aérodynamique pour obtenir la vitesse air estimée.

Une alarme (sonore et/ou visuelle) qui est par exemple reliée à l'unité de calcul 37 via une liaison 38, est déclenchée lorsque la différence entre la vitesse mesurée et la vitesse estimée excède un seuil (par exemple 20 noeuds) pendant une durée prédéterminée.

L'unité de calcul 34 calcule ladite vitesse aérodynamique Vcaero, de façon usuelle, à l'aide de l'expression suivante :

$$Vcaero = \sqrt{\frac{Ma * 9{,}81 * nz}{0{,}5 * \rho_0 * S * Cz\alpha * (\alpha - \alpha_0)}}$$

dans laquelle :

- $Ma$ est la masse de l'aéronef en kg ;
- $nz$ est le facteur de charge vertical ;
- $\rho_0$ est la densité de l'air, qui est égale à 1,225 kg/m$^3$ ;
- $Cz\alpha$ représente le gradient de portance et vaut environ 6 ;
- $\alpha$ est une valeur d'incidence de l'aéronef ; et
- $\alpha_0$ est l'incidence à portance nulle, qui dépend de la configuration des becs et volets et du braquage des aérofreins.

Dans un mode de réalisation préféré, l'unité de calcul 34 calcule la vitesse aérodynamique en utilisant comme valeur d'incidence $\alpha$, l'incidence estimée corrigée, déterminée par l'ensemble d'estimation 11.

L'ensemble d'estimation 33 comprend à la sortie de l'élément de calcul 34 des moyens de limitation 47 :

- pour limiter le signal (vitesse aérodynamique) reçu de l'élément de calcul 34 entre deux valeurs de vitesse, par exemple entre 80 et 400 noeuds ; et
- pour limiter la pente de ce signal.

L'ensemble d'estimation 33 comprend également un filtre 48 à la sortie des moyens de limitation 47.

Par ailleurs, l'unité de calcul 39 comprend :

- un élément de calcul 40 pour diviser la vitesse conventionnelle par la valeur à la sortie du filtre 48 ;

-   un système de filtrage 41 ; et
-   un multiplicateur 42 qui multiplie la valeur relative à la vitesse aérodynamique (reçue du filtre 48) par la sortie du système de filtrage 41 pour obtenir la vitesse air estimée.

Cette vitesse air estimée peut être transmise par une liaison 43 à différents éléments d'estimation et/ou de traitement du dispositif 1 et/ou à des moyens utilisateurs externes au dispositif 1 (par exemple par l'intermédiaire des liaisons 8 et 10).

Par ailleurs, le système de filtrage 41 comprend :

-   un élément de calcul 44 pour calculer la différence entre la sortie de l'élément de calcul 40 et la sortie du système de filtrage 41 ; et
-   un moyen de commutation 45 qui commute à 0 en cas de givrage (détecté par l'élément 37) ; et
-   un intégrateur 46.

Lors d'une détection d'un givrage par l'élément 37, le moyen de commutation 45 est commandé pour amener l'entrée de l'intégrateur 46, non plus à la sortie du moyen de calcul 44, mais à une valeur nulle, de sorte que l'intégrateur 46 utilise alors la valeur corrective figée (qui est enregistrée). Cette valeur corrective figée correspond à la dernière valeur corrective calculée, avant la détection d'un problème de validité de la vitesse conventionnelle Vc.

L'unité de calcul 39 prévoit donc de multiplier la vitesse aérodynamique par ladite valeur corrective (à l'aide du multiplicateur 42). Ainsi, contrairement à la solution préconisée dans le brevet FR-2 979 993 précité, dans lequel la valeur de correction apportée à la vitesse aérodynamique est une valeur absolue, la correction mise en oeuvre par l'ensemble d'estimation 33 concerne un facteur multiplicateur. Cette manière d'appliquer la correction évite que la vitesse aérodynamique corrigée s'écarte de la vitesse air réelle si la défaillance de la centrale anémobarométrique se prolonge alors que la vitesse de l'aéronef varie fortement (passage d'une vitesse de croisière à une vitesse d'approche).

L'intégrateur 46 calcule la valeur corrective *Vcorr* à l'aide de l'expression d'intégration suivante :

$$Vcorr = (Vc/Vcaero)/(1+\tau s)$$

dans laquelle :

-   Vc est la vitesse conventionnelle ;
-   *Vcaero* est la vitesse aérodynamique ; et
-   $\tau$ est la constante de temps.

L'expression d'intégration précitée est écrite sous forme d'une représentation de Laplace avec $\tau$ la constante de temps et s la dérivée.

Ainsi, grâce audit ensemble d'estimation 33 du dispositif 1, on dispose à bord de l'aéronef d'une information de vitesse air alternative Vcest (par rapport aux vitesses usuelles), qui :

-   d'une part, présente une précision suffisamment élevée pour qu'elle puisse être utilisée par divers systèmes de l'aéronef ; et
-   d'autre part, est susceptible d'être déterminée même en cas de problème de validité de la vitesse conventionnelle Vc, c'est-à-dire même en cas de défaillance d'une centrale anémobarométrique ou de sondes de pression associées, notamment des sondes Pitot.

L'ensemble d'estimation 33 du dispositif 1 permet ainsi simultanément :

-   d'une part, en l'absence de problème de validité de la vitesse conventionnelle Vc, par la correction réalisée sur la vitesse aérodynamique Vcaero de manière à la faire converger vers la vitesse conventionnelle Vc, de remédier à un problème de précision réduite d'une vitesse aérodynamique Vcaero ; et
-   d'autre part, en cas de problème de validité (ou de perte) de la vitesse conventionnelle Vc (notamment lors d'un problème sur les sondes Pitot) de ne pas en tenir compte de cette dernière.

Dans ce dernier cas, on dispose toujours d'une vitesse air estimée Vcest précise, puisque l'on continue à corriger la vitesse aérodynamique Vcaero, en la multipliant par une valeur corrective figée qui est la plus précise possible, étant donné qu'elle correspond à la dernière valeur corrective calculée avant la détection du problème de validité de la vitesse conventionnelle Vc.

Par ailleurs, au décollage de l'aéronef, c'est-à-dire lors de l'activation du dispositif 1, ce dernier initialise l'intégrateur 46, à une valeur Vc/Vcaero de telle sorte que la vitesse air estimée Vcest est alors égale à la vitesse conventionnelle Vc.

Par ailleurs, dans le cadre de la présente invention, on peut également prévoir une solution alternative à la vitesse air estimée. Il est, en effet, également possible de calculer un nombre de Mach estimé M2 plutôt qu'une vitesse estimée à partir de l'équation de portance suivante (avec PS la pression statique) :

$$M2 = \sqrt{\frac{Ma * 9{,}81 * nz}{0{,}7 * PS * S * Cz\alpha * (\alpha - \alpha_0)}}$$

Dans ce cas, on réalise :

- une intégration du rapport *Mach/M2* pour obtenir le nombre de Mach estimé tant que le givrage n'est pas détecté ;
- un calcul de la vitesse vraie et de l'incidence comme décrit précédemment ; et
- une même surveillance de la température totale givrée.

Le calcul de la vitesse Vc2 estimée est réalisé à l'aide de la formule de Fabre-Bilange (exprimée en noeuds) :

$$Vc2 = 661{,}5 * M2 * \sqrt{PS/P0}(1 + 1/8 * (1 - PS/P0) * M2^2$$

Cette expression est correcte quelle que soit l'altitude.

Le dispositif 1, tel que décrit ci-dessus, présente une adaptation rapide à tout type d'aéronef. De plus, l'invention ne prévoit pas de supprimer les sondes aérodynamiques (sondes de pression totale, sondes d'incidence, sondes de température totale,...), mais d'apporter une solution permettant à l'aéronef de voler un certain temps sous des conditions de givrage sévères, sans de telles sondes, même avec des gradients de vents ou des turbulences.

## Revendications

1. Procédé d'estimation automatique d'au moins un paramètre lié à un vol d'un aéronef, dont au moins une incidence de l'aéronef, ledit procédé comprenant au moins une première suite d'étapes successives pour déterminer automatiquement une incidence estimée corrigée, ladite première suite d'étapes successives consistant, de façon automatique et itérative :

   a) à calculer une incidence estimée à partir de paramètres aérodynamiques et de paramètres inertiels liés à l'aéronef ;
   b) à mesurer une incidence de l'aéronef ;
   c) à vérifier si l'incidence mesurée est considérée comme cohérente ou incohérente,
   d) en fonction de la vérification réalisée à l'étape c) :

      - tant que l'incidence mesurée est considérée comme cohérente, à déterminer une valeur de correction et à ajouter cette valeur de correction à ladite incidence estimée pour obtenir l'incidence estimée corrigée ; et
      - dès que l'incidence mesurée est considérée comme incohérente, et tant que cela reste le cas, à ajouter une valeur corrective figée à ladite incidence estimée pour obtenir l'incidence estimée corrigée,

   ledit procédé comprenant, de plus, une seconde suite d'étapes successives pour déterminer automatiquement une vitesse air estimée d'un aéronef, ladite seconde suite d'étapes successives consistant, de façon automatique et itérative :

      A/ à calculer une vitesse air dite vitesse aérodynamique, à partir de valeurs courantes de paramètres aérodynamiques et de paramètres inertiels de l'aéronef, dont une valeur d'incidence en utilisant comme valeur d'incidence, l'incidence estimée corrigée, déterminée à l'étape d) de la première suite d'étapes successives ;

B/ à déterminer une vitesse conventionnelle courante, à l'aide d'une centrale anémobarométrique ;

C/ à soustraire à cette vitesse conventionnelle une vitesse estimée à l'itération précédente de manière à obtenir une vitesse résiduelle ;

D/ à comparer cette vitesse résiduelle à une valeur de seuil ;

E/ en fonction de la comparaison réalisée à l'étape D/ :

- tant que cette vitesse résiduelle est inférieure ou égale à ladite valeur de seuil, à calculer une valeur corrective que l'on multiplie à ladite vitesse aérodynamique pour obtenir la vitesse air estimée ; et
- dès que cette vitesse résiduelle est supérieure à ladite valeur de seuil, et tant que cela reste le cas, à appliquer une valeur corrective figée que l'on multiplie à ladite vitesse aérodynamique pour obtenir la vitesse air estimée.

2. Procédé selon la revendication 1,
   **caractérisé en ce que** l'étape a) consiste à calculer l'incidence estimée $\alpha$ à l'aide de l'expression suivante :

$$\alpha = (\theta - \gamma)/\cos\phi$$

dans laquelle :

- $\theta$ est un angle d'inclinaison longitudinale de l'aéronef ;
- $\phi$ est un angle de roulis de l'aéronef ;
- cos est le cosinus ; et
- $\gamma$ est une pente air de l'aéronef.

3. Procédé selon la revendication 2,
   **caractérisé en ce qu'**il comprend une étape consistant à calculer la pente air $\gamma$ à l'aide de l'expression suivante :

$$\gamma = Vzbi/Vtas$$

dans laquelle :

- *Vzbi* est une vitesse verticale déterminée à partir de données inertielles de l'aéronef ; et
- *Vtas* est une vitesse vraie, qui correspond à une vitesse vraie estimée au moins en absence de valeur de vitesse vraie fournie par un calculateur de données air.

4. Procédé selon l'une quelconque des revendications précédentes,
   **caractérisé en ce qu'**il comprend une étape consistant à calculer une température totale estimée *TAT1* à l'aide de l'expression suivante :

$$TAT1 = (k3 + \Delta ISA1 - k4 * Zp) * (1 + k5 * M1^2)$$

dans laquelle :

- *k3* à *k5* sont des valeurs prédéterminées ;
- *Zp* est une altitude de l'aéronef ;
- *M1* est un nombre de Mach estimé ; et
- $\Delta ISA1 = ((TAT/(1+k6*s))*(1/(1+k7*M1^2)))-k8+k9*Zp$

dans laquelle :

- TAT est une température totale mesurée ;
- l'expression $(TAT/(1+k6*s))$ correspond à la valeur TAT filtrée par un filtre du premier ordre, de constante de temps *k6* ; et
- *k6* à *k9* sont des valeurs prédéterminées.

**5.** Procédé selon l'une quelconque des revendications précédentes, **caractérisé en ce qu'**il comprend une étape consistant à calculer un nombre de Mach estimé *M1* à l'aide des expressions suivantes :

- quand une altitude *Zp* de l'aéronef est comprise entre le sol et une première valeur prédéterminée :

$$M1 = (Vc1/k10)*(1+k11*Zp)^4$$

- quand l'altitude *Zp* de l'aéronef est comprise entre ladite première valeur et une seconde valeur prédéterminée supérieure à ladite première valeur :

$$M1 = (Vc1/k10)*(1+k11*Zp+k12*(Zp-k13))^4$$

dans lesquelles :

- *Vc1* est une vitesse air estimée ;
- *Zp* est l'altitude de l'aéronef comprise entre le sol et ladite seconde valeur ; et
- *k10* à *k13* sont des paramètres prédéterminés.

**6.** Procédé selon l'une quelconque des revendications précédentes, **caractérisé en ce qu'**à l'étape c), l'incidence mesurée est considérée comme incohérente, si l'une des conditions suivantes est remplie :

- la différence entre une incidence estimée et l'incidence mesurée est supérieure à une valeur de seuil prédéterminée pendant une durée prédéterminée ; et
- un calculateur de données air considère l'incidence mesurée comme incohérente.

**7.** Procédé selon l'une quelconque des revendications précédentes, **caractérisé en ce qu'**il comprend une étape de surveillance d'au moins une température totale mesurée pour détecter un éventuel givrage d'une sonde de température totale.

**8.** Procédé selon l'une des revendications 1 à 7, **caractérisé en ce que** l'étape E/ comprend une opération consistant à calculer la valeur corrective *Vcorr* à l'aide de l'expression d'intégration suivante :

$$Vcorr = (Vc/Vcaero)/(1+\tau s)$$

dans laquelle :

- *Vc* est la vitesse conventionnelle ;
- *Vcaero* est la vitesse aérodynamique ; et
- $\tau$ est une constante de temps.

**9.** Dispositif d'estimation automatique d'au moins un paramètre lié à un vol d'un aéronef, dont au moins une incidence de l'aéronef, ledit dispositif (1) comportant au moins un premier ensemble d'estimation (11) pour déterminer automatiquement une incidence estimée corrigée, ledit premier ensemble d'estimation (11) comprenant :

- une première unité de calcul (13) configurée pour calculer une incidence estimée à partir de paramètres aérodynamiques et de paramètres inertiels liés à l'aéronef ;
- une unité de réception (12) configurée pour recevoir une incidence mesurée de l'aéronef ; et
- une unité de vérification (24) configurée pour vérifier si l'incidence mesurée est considérée comme cohérente ou incohérente,

**caractérisé en ce que** ledit premier ensemble d'estimation (11) comprend, de plus, une seconde unité de calcul (25) configurée pour, en fonction de la vérification réalisée par l'unité de vérification (24) :

• tant que l'incidence mesurée est considérée comme cohérente, déterminer une valeur de correction et ajouter cette valeur de correction à ladite incidence estimée pour obtenir l'incidence estimée corrigée ; et
• dès que l'incidence mesurée est considérée comme incohérente, et tant que cela reste le cas, ajouter une valeur corrective figée à ladite incidence estimée pour obtenir l'incidence estimée corrigée.

et **en ce qu'**il comporte, de plus, un second ensemble d'estimation (33) pour déterminer automatiquement une vitesse air estimée d'un aéronef, ledit second ensemble d'estimation (33) comprenant :
- une troisième unité de calcul (34) configurée pour calculer une vitesse air dite vitesse aérodynamique, à partir de valeurs courantes de paramètres aérodynamiques et de paramètres inertiels de l'aéronef, dont une valeur d'incidence ;
- une unité de réception (35) configurée pour recevoir une vitesse conventionnelle courante déterminée par une centrale anémobarométrique ;
- une quatrième unité de calcul (36) configurée pour soustraire à cette vitesse conventionnelle une vitesse estimée à une itération précédente de manière à obtenir une vitesse résiduelle ;
- une cinquième unité de calcul (37) configurée pour comparer cette vitesse résiduelle à une valeur de seuil ; et
- une sixième unité de calcul (39) configurée, pour en fonction de cette comparaison :

• tant que cette vitesse résiduelle est inférieure ou égale à ladite valeur de seuil, calculer une valeur corrective qui est appliquée à ladite vitesse aérodynamique pour obtenir la vitesse air estimée ; et
• dès que cette vitesse résiduelle est supérieure à ladite valeur de seuil, illustrant la détection d'un problème de validité de la vitesse conventionnelle, et tant que cela reste le cas, appliquer une valeur corrective figée à ladite vitesse aérodynamique pour obtenir la vitesse air estimée,

la troisième unité de calcul (34) étant configurée pour calculer la vitesse aérodynamique en utilisant comme valeur d'incidence, l'incidence estimée corrigée, déterminée par le premier ensemble d'estimation (11).

10. Dispositif selon la revendication 9,
**caractérisé en ce qu'**il comporte, de plus, au moins l'un des ensembles suivants :

- un ensemble d'estimation (28) pour déterminer une vitesse vraie estimée ;
- un ensemble d'estimation (29) pour déterminer une température totale estimée ; et
- un ensemble d'estimation (31) pour déterminer un nombre de Mach estimé.

11. Aéronef,
**caractérisé en ce qu'**il comporte un dispositif (1) tel que celui spécifié sous l'une quelconque des revendications 9 et 10.

**Patentansprüche**

1. Verfahren zum automatischen Schätzen von mindestens einem Parameter, der mit einem Flug eines Luftfahrzeugs verbunden ist, darunter mindestens ein Anstellwinkel des Flugzeugs, wobei das Verfahren mindestens eine erste Folge von aufeinanderfolgenden Schritten aufweist, um automatisch einen korrigierten geschätzten Anstellwinkel zu bestimmen, wobei die erste Reihe von aufeinanderfolgenden Schritten darin besteht, automatisch und iterativ:

a) einen geschätzten Anstellwinkel ausgehend von aerodynamischen Parametern und von Trägheitsparametern, die mit dem Luftfahrzeug verbunden sind, zu berechnen;
b) einen Anstellwinkel des Luftfahrzeugs zu messen;
c) zu überprüfen, ob der gemessene Anstellwinkel als kohärent oder inkohärent angesehen wird;
d) in Abhängigkeit von der in Schritt c) durchgeführten Überprüfung:

- sofern der gemessene Anstellwinkel als kohärent angesehen wird, einen Korrekturwert zu bestimmen und diesen Korrekturwert zu dem geschätzten Anstellwinkel hinzuzufügen, um den korrigierten geschätzten Anstellwinkel zu erhalten; und
- sofern der gemessene Anstellwinkel als inkohärent angesehen wird und solange dies der Fall bleibt, einen festgelegten Korrekturwert zu dem geschätzten Anstellwinkel hinzuzufügen, um den korrigierten geschätzten Anstellwinkel zu erhalten,

wobei das Verfahren ferner eine zweite Folge von aufeinanderfolgenden Schritten aufweist, um automatisch eine geschätzte Luftgeschwindigkeit eines Luftfahrzeugs zu bestimmen, wobei die zweite Reihe von aufeinanderfolgenden Schritten darin besteht, automatisch und iterativ:

A/ eine Luftgeschwindigkeit, die Eigengeschwindigkeit genannt wird, ausgehend von aktuellen Werten von aerodynamischen Parametern und von Trägheitsparametern des Luftfahrzeugs zu berechnen, darunter einen Wert eines Anstellwinkels, indem als Wert eines Anstellwinkels der korrigierte geschätzte Anstellwinkel verwendet wird, der in Schritt d) der ersten Folge von aufeinanderfolgenden Schritten bestimmt wird;

B/ eine aktuelle berichtigte Fluggeschwindigkeit mit Hilfe von einem Flugdatenrechner zu bestimmen;

C/ von dieser berichtigten Fluggeschwindigkeit eine in der vorhergehenden Iteration geschätzte Geschwindigkeit derart zu subtrahieren, um eine Restgeschwindigkeit zu erhalten;

D/ diese Restgeschwindigkeit mit einem Schwellenwert zu vergleichen;

E/ in Abhängigkeit von dem in Schritt D/ durchgeführten Vergleichen:

- sofern diese Restgeschwindigkeit niedriger als oder gleich dem Schwellenwert ist, einen Korrekturwert zu berechnen, der mit der Eigengeschwindigkeit multipliziert wird, um die geschätzte Luftgeschwindigkeit zu erhalten und

- sobald diese Restgeschwindigkeit höher als der Schwellenwert ist, solange dies der Fall bleibt, einen festgelegten Korrekturwert anzuwenden, der mit der Eigengeschwindigkeit multipliziert wird, um die geschätzte Luftgeschwindigkeit zu erhalten.

2. Verfahren nach Anspruch 1,
   **dadurch gekennzeichnet, dass** der Schritt a) darin besteht, den geschätzten Anstellwinkel $\alpha$ mit Hilfe des folgenden Ausdrucks zu berechnen:

$$\alpha = (\theta - \gamma)/\cos\phi$$

worin:

- $\vartheta$ ein Längsneigungswinkel des Luftfahrzeugs ist;
- $\phi$ ein Rollwinkel des Luftfahrzeugs ist;
- cos der Kosinus ist und
- $\gamma$ eine Steigung in der Luft des Luftfahrzeugs ist.

3. Verfahren nach Anspruch 2,
   **dadurch gekennzeichnet, dass** es einen Schritt aufweist, der darin besteht, die Steigung in der Luft $\gamma$ mit Hilfe des folgenden Ausdrucks zu berechnen:

$$\gamma = Vzbi/Vtas$$

worin:

- $Vzbi$ eine Vertikalgeschwindigkeit ist, die ausgehend von Trägheitsdaten des Luftfahrzeugs bestimmt wird, und
- $Vtas$ eine wahre Eigengeschwindigkeit ist, die einer geschätzten wahren Eigengeschwindigkeit mindestens in Abwesenheit eines Wertes einer wahren Eigengeschwindigkeit entspricht, die von einem Luftdatenrechner bereitgestellt wird.

4. Verfahren nach einem der vorhergehenden Ansprüche,
   **dadurch gekennzeichnet, dass** es einen Schritt aufweist, der darin besteht, eine geschätzte Gesamttemperatur $TAT1$ mit Hilfe des folgenden Ausdrucks zu berechnen:

$$TAT1 = (k3 + \Delta ISA1 - k4 * Zp) * (1 + k5 * M1^2)$$

worin:

- *k3* bis *k5* vorbestimmte Werte sind;
- *Zp* eine Höhe des Luftfahrzeugs ist;
- *M1* eine geschätzte Machzahl ist;

$$\Delta ISA1 = ((TAT/(1 + k6 * s)) * (1/(1 + k7 * M1^2))) - k8 + k9 * Zp$$

worin:

• *TAT* eine gemessene Gesamttemperatur ist;
• der Ausdruck (*TAT*/(1 + *k6* * *s*)) dem Wert TAT, der durch einen Filter erster Ordnung gefiltert wird, von der Zeitkonstante *k6* entspricht und
• *k6* bis *k9* vorbestimmte Werte sind.

5. Verfahren nach einem der vorhergehenden Ansprüche, **dadurch gekennzeichnet, dass** es einen Schritt aufweist, der darin besteht, eine geschätzte Machzahl mit Hilfe der folgenden Ausdrücke zu berechnen:

- wenn eine Höhe *Zp* des Luftfahrzeugs zwischen dem Boden und einem ersten vorbestimmten Wert liegt:

$$M1 = (Vc1/k10) * (1 + k11 * Zp)^4$$

- wenn die Höhe *Zp* des Luftfahrzeugs zwischen dem ersten vorbestimmten Wert und einem zweiten vorbestimmten Wert liegt, der höher als der erste Wert ist:

$$M1 = (Vc1/k10) * (1 + k11 * Zp + k12 * (Zp - k13))^4$$

worin:

• *Vc1* eine geschätzte Luftgeschwindigkeit ist;
• *Zp* die Höhe des Luftfahrzeugs ist, die zwischen dem Boden und einem zweiten Wert liegt, und
• *k10* bis *k*13 vorbestimmte Werte sind.

6. Verfahren nach einem der vorhergehenden Ansprüche,
**dadurch gekennzeichnet, dass** in dem Schritt c) der gemessene Anstellwinkel als inkohärent betrachtet wird, wenn eine der folgenden Bedingungen erfüllt wird:

- die Differenz zwischen einem geschätzten Anstellwinkel und dem gemessenen Anstellwinkel größer als ein vorbestimmter Schwellenwert während einer vorbestimmten Zeitspanne ist und
- ein Luftdatenrechner den gemessenen Anstellwinkel als inkohärent ansieht.

7. Verfahren nach einem der vorhergehenden Ansprüche,
**dadurch gekennzeichnet, dass** es einen Schritt des Überwachens von mindestens einer gemessenen Gesamttemperatur aufweist, um eine eventuelle Vereisung einer Gesamttemperatursonde zu erkennen.

8. Verfahren nach einem der Ansprüche 1 bis 7,
**dadurch gekennzeichnet, dass** der Schritt E/ einen Vorgang aufweist, der darin besteht, den Korrekturwert *Vcorr* mit Hilfe des folgenden Integrationsausdrucks zu berechnen:

$$Vcorr = (Vc/Vcaero)/(1 + \varpi)$$

worin:

- Vc die berichtigte Fluggeschwindigkeit ist;

- *Vcaero* die Eigengeschwindigkeit ist und
- r eine Zeitkonstante ist.

9. Vorrichtung zum automatischen Schätzen von mindestens einem Parameter, der mit einem Flug eines Luftfahrzeugs verbunden ist, darunter mindestens einen Anstellwinkel des Flugzeugs, wobei die Vorrichtung (1) mindestens eine erste Anordnung zum Schätzen (11) aufweist, um automatisch einen korrigierten geschätzten Anstellwinkel zu bestimmen, wobei die erste Anordnung zum Schätzen (11) Folgendes aufweist:

- eine erste Recheneinheit (13), die konfiguriert ist, um einen geschätzten Anstellwinkel ausgehend von aerodynamischen Parametern und von Trägheitsparametern, die mit dem Luftfahrzeug verbunden sind, zu berechnen;
- eine Empfangseinheit (12), die konfiguriert ist, um einen gemessenen Anstellwinkel des Flugzeugs zu empfangen und
- eine Überprüfungseinheit (24), die konfiguriert ist, um zu überprüfen, ob der gemessene Anstellwinkel als kohärent oder inkohärent angesehen wird, **dadurch gekennzeichnet, dass** die erste Anordnung zum Schätzen (11) ferner eine zweite Recheneinheit (25) aufweist, die konfiguriert ist, um in Abhängigkeit von der Überprüfung, die von der Überprüfungseinheit (24) durchgeführt wird:

• sofern der gemessene Anstellwinkel als kohärent angesehen wird, einen Korrekturwert zu bestimmen und diesen Korrekturwert zu dem geschätzten Anstellwinkel hinzuzufügen, um den korrigierten geschätzten Anstellwinkel zu erhalten und
• sofern der gemessene Anstellwinkel als inkohärent angesehen wird und solange dies der Fall bleibt, einen festgelegten Korrekturwert zu dem geschätzten Anstellwinkel hinzuzufügen, um den korrigierten geschätzten Anstellwinkel zu erhalten,

und dadurch, dass es ferner eine zweite Anordnung zum Schätzen (33) aufweist, um automatisch eine geschätzte Luftgeschwindigkeit eines Luftfahrzeugs zu bestimmen, wobei die zweite Anordnung zum Schätzen (33) Folgendes aufweist:
- eine dritte Recheneinheit (34), die konfiguriert ist, um eine Luftgeschwindigkeit, die Eigengeschwindigkeit genannt wird, ausgehend von aktuellen Werten von aerodynamischen Parametern und von Trägheitsparametern des Luftfahrzeugs zu berechnen, darunter einen Wert eines Anstellwinkels;
- eine Empfangseinheit (35), die konfiguriert ist, um eine aktuelle berichtigte Fluggeschwindigkeit, die mit einem Flugdatenrechner bestimmt wird, zu empfangen;
- eine vierte Recheneinheit (36), die konfiguriert ist, um von dieser berichtigten Fluggeschwindigkeit eine in der vorhergehenden Iteration geschätzten Geschwindigkeit derart zu subtrahieren, um eine Restgeschwindigkeit zu erhalten;
- eine fünfte Recheneinheit (37), die konfiguriert ist, um diese Restgeschwindigkeit mit einem Schwellenwert zu vergleichen; und
- eine sechste Recheneinheit (39), die konfiguriert ist, um in Abhängigkeit von diesem Vergleichen:

• sofern diese Restgeschwindigkeit niedriger als oder gleich dem Schwellenwert ist, einen Korrekturwert zu berechnen, der auf die Eigengeschwindigkeit angewendet wird, um die geschätzte Luftgeschwindigkeit zu erhalten und
• sobald diese Restgeschwindigkeit höher als der Schwellenwert ist, was das Erkennen eines Problems der Gültigkeit der berichtigtem Fluggeschwindigkeit darstellt, und solange dies der Fall bleibt, einen festgelegten Korrekturwert auf die Eigengeschwindigkeit anzuwenden, um die geschätzte Luftgeschwindigkeit zu erhalten,

wobei die dritte Recheneinheit (34) konfiguriert ist, um die Eigengeschwindigkeit zu berechnen, indem als Wert eines Anstellwinkels der korrigierte geschätzte Anstellwinkel verwendet wird, der von der ersten Anordnung zum Schätzen (11) bestimmt wird.

10. Vorrichtung nach Anspruch 9,
**dadurch gekennzeichnet, dass** sie ferner mindestens eine der folgenden Anordnungen aufweist:

- eine Anordnung zum Schätzen (28), um eine geschätzte wahre Eigengeschwindigkeit zu bestimmen;
- eine Anordnung zum Schätzen (29), um eine geschätzte Gesamttemperatur zu bestimmen und
- eine Anordnung zum Schätzen (31), um eine geschätzten Machzahl zu bestimmen.

**11.** Luftfahrzeug,
**dadurch gekennzeichnet, dass** es eine Vorrichtung (1) wie jene, die in einem der vorhergehenden Ansprüche 9 und 10 spezifiziert ist, aufweist.

**Claims**

**1.** A method for automatically estimating at least one parameter related to a flight of an aircraft, including at least one incidence of the aircraft, said method comprising at least one first series of successive steps for automatically determining a corrected estimated incidence, said first series of successive steps consisting, in an automatic and iterative manner:

> a) in computing an estimated incidence on the basis of aerodynamic parameters and of inertial parameters related to the aircraft;
> b) in measuring an incidence of the aircraft;
> c) in verifying whether the measured incidence is considered to be consistent or inconsistent;
> d) as a function of the verification carried out in step c):
>
> > - as long as the measured incidence is considered to be consistent, in determining a correction value and in adding this correction value to said estimated incidence to obtain the corrected estimated incidence; and
> > - as soon as the measured incidence is considered to be inconsistent, and as long as this remains the case, in adding a fixed corrective value to said estimated incidence to obtain the corrected estimated incidence,
>
> said method comprising, moreover, a second series of successive steps for automatically determining an estimated air speed of an aircraft, said second series of successive steps consisting, in an automatic and iterative manner:
>
> > A/ in computing an air speed termed the aerodynamic speed, on the basis of current values of aerodynamic parameters and of inertial parameters of the aircraft, including an incidence value by using the corrected estimated incidence, determined in step d) of the first series of successive steps, as incidence value;
> > B/ in determining a current conventional speed, with the aid of an anemobarometric platform;
> > C/ in subtracting a speed estimated at the previous iteration from this conventional speed so as to obtain a residual speed;
> > D/ in comparing this residual speed with a threshold value; and
> > E/ as a function of the comparison realized at step D/:
> >
> > > - as long as this residual speed is less than or equal to said threshold value, in computing a corrective value which is applied to said aerodynamic speed to obtain the estimated air speed; and
> > > - as soon as this residual speed is greater than said threshold value, and as long as this remains the case, in applying a fixed corrective value which is applied to said aerodynamic speed to obtain the estimated air speed,

**2.** The method as claimed in claim 1,
wherein step a) consists in computing the estimated incidence $\alpha$ with the aid of the following expression:

$$\alpha = (\theta - \gamma)/\cos\phi$$

in which:

> - $\theta$ is an angle of longitudinal inclination of the aircraft;
> - $\phi$ is an angle of roll of the aircraft;
> - cos is the cosine; and
> - $\gamma$ is an air slope of the aircraft.

**3.** The method as claimed in claim 2,
which comprises a step consisting in computing the air slope $\gamma$ with the aid of the following expression:

$$\gamma = Vzbi/Vtas$$

in which:

- *Vzbi* is a vertical speed determined on the basis of inertial data of the aircraft; and
- *Vtas* is a true speed, which corresponds to an estimated true speed at least in the absence of any true speed value provided by an air data computer.

4. The method as claimed in any of the previous claims, which comprises a step consisting in computing an estimated total temperature *TAT1* with the aid of the following expression:

$$TAT1 = (k3 + \Delta ISA1 - k4 * Zp) * (1 + k5 * M1^2)$$

in which:

- *k3* to *k5* are predetermined values;
- *Zp* is an altitude of the aircraft;
- *M1* is an estimated Mach number; and
- $\Delta ISA1 = ((TAT/(1+k6*s))*(1/(1+k7*M1^2)))-k8+k9*Zp$

in which:

- TAT is a measured total temperature;
- the expression ($TAT/(1+k6*s)$) corresponds to the value TAT filtered by a first-order filter, with time constant $k6$; and
- $k6$ to $k9$ are predetermined values.

5. The method as claimed in any of the previous claims, which comprises a step consisting in computing an estimated Mach number *M1* with the aid of the following expressions:

- when an altitude *Zp* of the aircraft lies between the ground and a first predetermined value:

$$M1 = (Vc1/k10) * (1 + k11 * Zp)^4$$

- when the altitude *Zp* of the aircraft lies between said first value and a second predetermined value greater than said first value:

$$M1 = (Vc1/k10) * (1 + k11 * Zp + k12 * (Zp - k13))^4$$

in which:

- *Vc1* is an estimated air speed;
- *Zp* is the altitude of the aircraft lying between the ground and said second value; and
- *k10* to *k13* are predetermined parameters.

6. The method as claimed in any of the previous claims, wherein in step c), the measured incidence is considered to be inconsistent if one of the following conditions is fulfilled:

- the difference between an estimated incidence and the measured incidence is greater than a predetermined threshold value for a predetermined duration; and
- an air data computer considers the measured incidence to be inconsistent.

7. The method as claimed in any of the previous claims,
   which comprises a step of monitoring at least one measured total temperature to detect possible icing of a total temperature probe.

8. The method as claimed in any of claims 1 to 7,
   wherein step E/ comprises an operation consisting in computing the corrective value *Vcorr* with the aid of the following integration expression:

$$Vcorr = (Vc/Vcaero)/(1 + \tau s)$$

in which:

- *Vc* is the conventional speed;
- *Vcaero* is the aerodynamic speed; and
- $\tau$ is a time constant.

9. A device for automatically estimating at least one parameter related to a flight of an aircraft, including at least one incidence of the aircraft, said device comprising at least one first estimation assembly for automatically determining a corrected estimated incidence, said first estimation assembly comprising:

   - a first computation unit configured to compute an estimated incidence on the basis of aerodynamic parameters and of inertial parameters related to the aircraft;
   - a reception unit configured to receive a measured incidence of the aircraft; and
   - a verification unit configured to verify whether the measured incidence is considered to be consistent or inconsistent,

   wherein said first estimation assembly comprises, moreover, a second computation unit configured to, as a function of the verification carried out by the verification unit:

   • as long as the measured incidence is considered to be consistent, determine a correction value and add this correction value to said estimated incidence to obtain the corrected estimated incidence; and
   • as soon as the measured incidence is considered to be inconsistent, and as long as this remains the case, add a fixed corrective value to said estimated incidence to obtain the corrected estimated incidence,

   and which comprises, moreover, a second estimation assembly for automatically determining an estimated air speed of an aircraft, said second estimation assembly comprising:
   - a third computation unit configured to compute an air speed termed the aerodynamic speed, on the basis of current values of aerodynamic parameters and of inertial parameters of the aircraft, including an incidence value;
   - a reception unit configured to receive a current conventional speed determined by an anemobarometric platform;
   - a fourth computation unit configured to subtract a speed estimated at a previous iteration from this conventional speed so as to obtain a residual speed;
   - a fifth computation unit configured to compare this residual speed with a threshold value; and
   - a sixth computation unit configured to, as a function of this comparison:

   • as long as this residual speed is less than or equal to said threshold value, compute a corrective value which is applied to said aerodynamic speed to obtain the estimated air speed; and
   • as soon as this residual speed is greater than said threshold value, illustrating the detection of a problem of validity of the conventional speed, and as long as this remains the case, apply a fixed corrective value to said aerodynamic speed to obtain the estimated air speed,

   the third computation unit being configured to compute the aerodynamic speed using the corrected estimated incidence, determined by the first estimation assembly, as incidence value.

**10.** The device as claimed in claim 9,
which comprises, moreover, at least one of the following assemblies:

- an estimation assembly for determining an estimated true speed;
- an estimation assembly for determining an estimated total temperature; and
- an estimation assembly for determining an estimated Mach number.

**11.** An aircraft,
which comprises a device such as that specified under any of claims 9 and 10.

Fig. 1

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2979993
- US 2010100260 A
- EP 2642302 A
- WO 2013144157 A